# EUROPÄISCHE PATENTSCHRIFT

(11) **EP 0 980 175 B1**
(45) Veröffentlichungstag und Bekanntmachung des Hinweises auf die Patenterteilung: **23.06.2010**
(21) Anmeldenummer: 99113488.3
(22) Anmeldetag: 13.07.1999
(51) Int. Cl.: H04M 3/42, H04M 3/62

(54) **Verfahren zur Anzeige von Daten über Zielteilnehmer**
Method for displaying data of called subscribers
Méthode de visualisation de données d'abonnés destinataires

(30) Priorität: 10.08.1998 DE 19836064
(43) Veröffentlichungstag der Anmeldung: 16.02.2000
(73) Patentinhaber: Tenovis GmbH & Co. KG, 60362 Frankfurt am Main (DE)
(72) Erfinder: Maldener, Nico-Johannes, 71229 Leonberg (DE); Glaser,Ulrich, 70499 Stuttgart (DE)
(74) Vertreter: Walkenhorst, Andreas

(56) Entgegenhaltungen:
- EP-A- 0 735 735
- DE-A- 3 437 773
- DE-A- 19 515 856

## Beschreibung

### Stand der Technik

Die Erfindung betrifft ein Verfahren zur Anzeige von Daten über Zielteilnehmer in einer Teilnehmer Endeinrichtung.

Aus der DE 3437773 C3 ist es bekannt, Statusinformationen, d.h. Betriebszustandsdaten, über Fernsprechteilnehmer in der Steuereinrichtung der Fernmeldevermittlungsanlage zu speichern. Über eine Eingabetastatur eines Teilnehmerendgerätes können dort bestimmte Rufnummern von Zielteilnehmern eingegeben werden. Für diese Zielteilnehmer erfolgt dann eine Übermittlung der Statusinformationen zusammen mit der Rufnummer und /oder des Namens und eine Anzeige auf einem Bildschirm des Teilnehmerendgerätes.

### Vorteile der Erfindung

Die Erfindung gemäß den Maßnahmen des Anspruch 1 erlaubt die Anzeige von Statusinformationen mit anderen teilnehmerindividuellen Daten in einem gemeinsamen Anzeigefeld. In den Unteransprüchen sind Weiterbildungen aufgezeigt.

Die Erfindung beruht auf folgenden Erkenntnissen:
Beim täglichen Telefonieren innerhalb von Vermittlungsanlagen ist die Gesprächsübergabe zu einem anderen Teilnehmer eine häufig benutzte Funktion. Um den Bedienungsablauf bei der Gesprächsübergabe zu unterstützen, wird häufig für die Suche nach dem Zielteilnehmer ein elektronisches Telefonbuch eingesetzt. In diesem Telefonbuch werden Teilnehmer über verschiedene Selektionskriterien ausgesucht und zur Wahl angeboten. Die Basis für solche Telefonbücher stellen in aller Regel umfangreiche Datenbanken auf PC's oder Hostsystemen dar. Elektronische Telefonbücher beinhalten seither weitgehend statische Informationen wie Namen und Rufnummer. Der Zustand (frei oder besetzt) eines Teilnehmers kann erst erkannt werden, wenn ein separater Dialog geführt wird (Besetzt-Anzeige) oder die Rufnummer des Teilnehmers gewählt wird. Derzeit unterstützen das elektronische Telefonbuch und die Besetzt-Anzeige die Arbeit von Vermittlungen. Beide Merkmale waren bis jetzt sowohl technisch und funktional voneinander isoliert, obwohl sie sich ergänzende Daten über Teilnehmer verwalten und dem Benutzer zur Anzeige bringen.

Bei der Erfindung läßt sich die für den Vermittlungsvorgang notwendige Information über den aktuellen Status (frei oder besetzt) des Zielteilnehmers im Telefonbuch anzeigen. Der Benutzer erkennt anhand dieser Information bereits vor einer Gesprächsübergabe, ob der Teilnehmer frei oder besetzt ist und ob die Gesprächsübergabe überhaupt erfolgreich sein kann.

Bei der Erfindung werden die dynamischen Daten einer Vermittlungsanlage (PABX) in einer externen Datenbank integriert, so daß alle dynamischen und statischen Daten über Zielteilnehmer selektiv in einem gemeinsamen Anzeigefeld ohne Dialogwechsel zur Anzeige gebracht werden können.

Der Benutzer erhält alle für die Abwicklung einer Gesprächsübergabe notwendigen Informationen im Dialog des elektronischen Telefonbuches. Zeitaufwendiges suchen nach den Telefonbuchdaten und Teilnehmerzuständen in verschiedenen Dialogen entfällt ebenso wie der Versuch einer Gesprächsübergabe auf einen besetzten Teilnehmer.

Bei der erfindungsgemäßen Lösung ist es ausreichend nur die Rufnummer oder ein sonstiges Indentifizierungsmerkmal eines Teilnehmers zusammen mit der Statusinformation zu übertragen. Andere Informationen wie der Name eines Teilnehmers können mit Hilfe einer Datenbank ermittelt werden.

### Zeichnungen

Anhand von Zeichnungen werden Ausführungsbeispiele des erfindungsgemäßen Verfahrens näher erläutert. Es zeigen:
Figur 1 ein Übersichtsbild zum Durchführen der Erfindung und
Figur 2 den Steuerablauf zur gemeinsamen Anzeige von dynamischen und statischen Teilnehmerdaten.

### Beschreibung von Ausführungsbeispielen

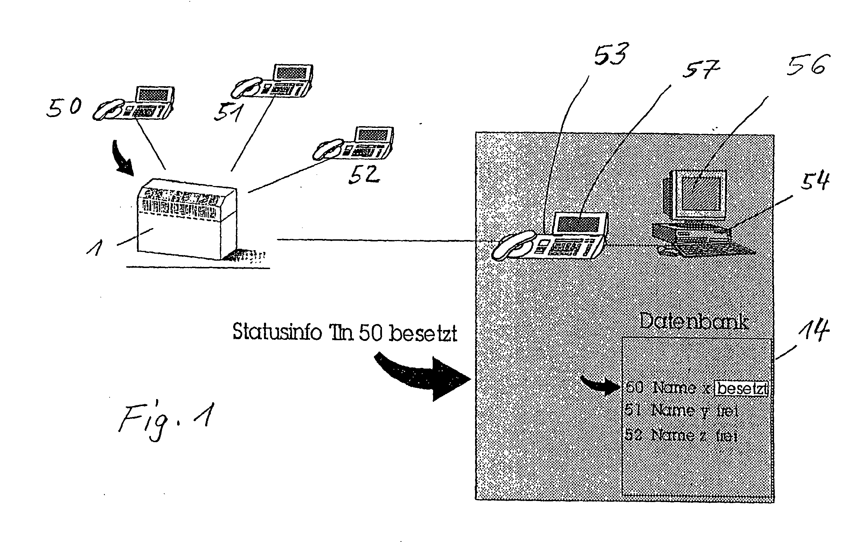

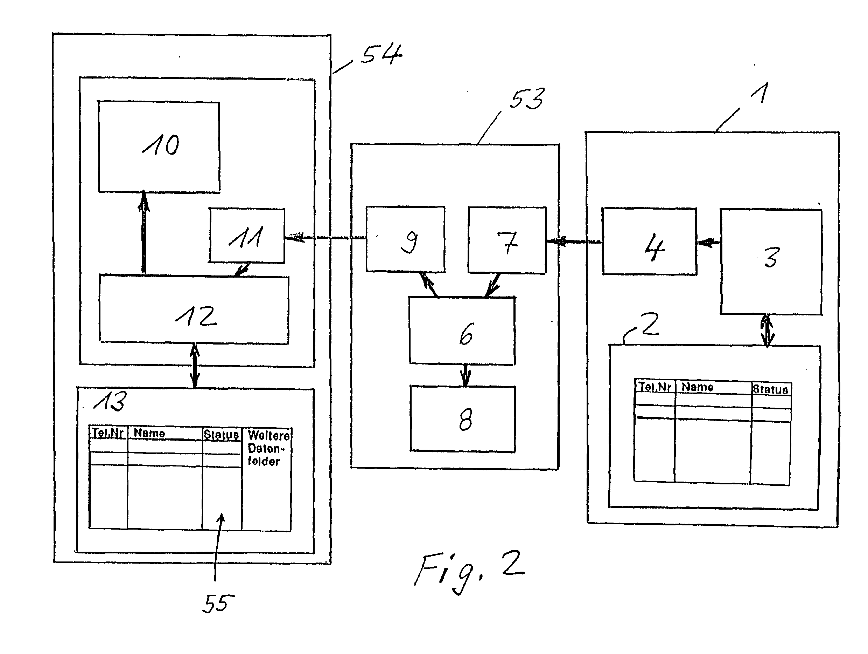

In einer Vermittlungsanlage, zum Beispiel einer privaten Nebenstellenanlage 1, gemäß Figur 1, entstehen durch den dynamischen Betrieb der Endgeräte in großen Mengen Statusinformationen über jeden einzelnen Teilnehmer, z.B. Teilnehmer 50, 51, 52. Diese Informationen werden, wie Figur 2 zeigt, von der Vermittlung 1 in einer Tabelle mit Teilnehmerdaten 2 verwaltet. Zugleich sendet die Steuerung 3 der Vermittlung 1 über das Endgeräteinterface 4 die Statusinformation der Teilnehmer 50, 51, 52 an speziell dafür vorgesehene Endgeräte, hier ein Teilnehmergerät 53 mit beigeordnetem Personal Computer 54, dessen Bildschirm als Anzeigeeinrichtung dient. Die übermittelte Information besteht aus einer eindeutigen Identifizierung, zum Beispiel der Teilnehmerrufnummer und einer codierten Statusmeldung (frei, besetzt, ...).

Im Endgerät 53 empfängt die Endgerätesteuerung 6 die übermittelte Meldung über das PABX-Interface 7. Die Statusinformationen werden zum einen der lokalen Besetzt-Anzeige 8 zugeführt und über das Personal Computer-Interface 9 an den Personal Computer 54 übermittelt. Die Informationen bestehen im Kern wieder aus der Teilnehmerrufnummer und dem Teilnehmerzustand.

Auf dem Personal Computer 54 sind zwei Komponenten aktiv: Eine für die Aufgabe speziell implementierte Applikation 10, beispielsweise Telefonbuchanzeige mit Besetztinformation und eine Datenbank 13, die entweder auf die Applikation zugeschnitten ist, oder als externe Datenbank durch den Kunden beigestellt wird. Die Datenbank 13 enthält Information über interne und externe Teilnehmer, das heißt Teilnehmer die als zur Nebenstellenanlage zugehörig angemeldet sind, sowie andere Teilnehmer, zum Beispiel aus dem Öffentlichen Telefonnetz. Pro Teilnehmer muß mindestens ein Datenfeld für die Rufnummer, den Namen und die Statusinformation vorhanden sein. Darüberhinaus kann eine Vielzahl von weiteren Datenfeldern für den Teilnehmer in der Datenbank 13 vorhanden sein. Beim Eintreffen der Statusinformationen wird über die Endgeräte - Schnittstelle 11 die PC-Steuerung 12 veranlaßt, die übermittelten Statusinformationen mit den teilnehmerindividuellen Daten der Datenbank 13 zu verknüpfen, wobei als Verknüpfungskriterium ein eindeutiger Index, zum Beispiel die Rufnummer oder eine sonstige Teilnehmeridentifizierung verwendet wird. Zur Rufnummer wird ein passender Eintrag in der Datenbank ermittelt und die Statusinformation in dem zugehörigen Datenfeld 55 unter Status eingetragen.

Wird zur Einleitung eines Vermittlungsvorganges das elektronische Telefonbuch bei der Suche nach einem internen Teilnehmer benutzt, so wird die Statusinformation des Teilnehmers neben allen anderen Teilnehmerdaten selektiv in einem gemeinsamen Anzeigefeld 14 zur Anzeige gebracht. Ein solches Anzeigefeld kann wie folgt aussehen:

| Rufnummer | Namen | Statusinformation |
|---|---|---|
| 50 | Meier | besetzt |
| 51 | Müller | frei |
| 52 | Bernhard | frei |

Dieser Anzeige entsprechen die Teilnehmerzustände: Teilnehmer 50 hebt ab, Teilnehmer 51 in Ruhe, Teilnehmer 52 in Ruhe.

Der Benutzer erkennt somit anhand der angezeigten Informationen bereits vor einer Gesprächsübergabe, ob der Zielteilnehmer frei oder besetzt ist und ob die Gesprächsübergabe überhaupt erfolgreich sein kann.

Über das Endgerät erfolgt wie zuvor erläutert die Verknüpfung von dynamischen Daten einer Nebenstellenanlage mit Daten von Datenbanken auf einem Personal Computer. Anstelle eines Personal Computers kann auch ein Host-System vorgesehen sein, daß diese Daten bei Bedarf zuspielt. Mit eingeführten Schnittstellen, zum Beispiel ODBC, können somit auch Kundendatenbanken mit den Daten einer Nebenstellenanlage integriert werden.

Für die Übertragung der Statusinformationen zusammen mit den Rufnummern von der Nebenstellenanlage zu den Teilnehmern kann zum Beispiel der D-Kanal im ISDN herangezogen werden, sodaß kein zusätzlicher Aufwand an Hardware oder Übertragungsbandbreite entsteht.

Anstelle des Namens kann aus der Datenbank, bzw. dem elektronischen Telefonbuch auch ein anderes Identifizierungsmerkmal entnommen werden und zusammen mit den Statusinformationen angezeigt werden, zum Beispiel eine Kundennummer oder ein zu einem Teilnehmer gehöriges Bild.

Das Anzeigefeld 14 kann sowohl auf dem PC-Bildschirm 56 als auch auf einer alphanumerischen Anzeigeeinrichtung 57 dargestellt werden. Wenn das Anzeigefeld 14 spezielle Grafikinformationen enthält, z.B. ein Bild des Dialogteilnehmers, bedeutet die Anzeige auf dem PC-Bildschirm 56 den geringeren Aufwand.

## Patentansprüche

1. Verfahren zur Anzeige von Daten über Zielteilnehmer (50, 51, 52) in einer Teilnehmerendeinrichtung **gekennzeichnet durch** die folgenden Schritte:
- Die in einer Vermittlungsanlage (1) anfallenden Statusinformationen über angeschlossene Teilnehmer werden zusammen mit der Rufnummer oder einer sonstigen Teilnehmeridentifizierung an solche Teilnehmer übermittelt, die eine besondere Anzeigeeinrichtung (54) für solche Statusinformationen aufweisen, oder denen eine solche Anzeigeeinrichtung beigeordnet ist,
- die übermittelten Statusinformationen werden mit teilnehmerindividuellen Daten einer Datenbank (13) verknüpft, wobei ein eindeutiger Index als Verknüpfungskriterium herangezogen wird,
- die miteinander verknüpften Daten werden selektiv in einem gemeinsamen Anzeigefeld (14) zur Anzeige gebracht.

2. Verfahren nach Anspruch 1, **dadurch gekennzeichnet, daß** ein elektronisches Telefonbuch als Basis für die Datenbank (13) verwendet wird, wobei bei Eintreffen einer beziehungweise einer neuen Statusinformation über die Rufnummer ein entsprechender Eintrag in der Datenbank vorgenommen wird.

3. Verfahren nach einem der Ansprüche 1 oder 2 **dadurch gekennzeichnet, daß** die übermittelte Statusinformation, sowohl einer lokalen Besetztanzeige (8) zugeführt wird als auch einer Einrichtung (54) zur Speicherung und Aktualisierung der Datenbank (13).

4. Verfahren nach Anspruch 3, **dadurch gekennzeichnet, daß** die Datenbank (13) entweder auf eine endgerätespezifische Applikation zugeschnitten ist oder als externe Datenbank beigestellt ist.

5. Verfahren nach einem der Ansprüche 2 bis 4, **dadurch gekennzeichnet, daß** bei der Einleitung eines Vermittlungsvorganges über das elektronische Telefonbuch die Statusinformation des anzuwählenden Teilnehmers zusammen mit den in der Datenbank (13) über diesen Teilnehmer gespeicherten Daten im gemeinsamen Anzeigefeld (14) zur Anzeige gebracht wird.

6. Verfahren nach einem der Ansprüche 1 bis 5, **dadurch gekennzeichnet, daß** in Abhängigkeit der übermittelten Statusinformation eine Gesprächsübergabe auf einen besetzten Teilnehmer verhindert wird.

7. Verfahren nach einem der Ansprüche 1 bis 6, **dadurch gekennzeichnet, daß** das gemeinsame Anzeigefeld (14) zumindest die Datenfelder der Rufnummer, des Namens sowie der Statusinformation umfaßt.

8. Verfahren nach einem der Ansprüche 1 bis 7 **dadurch gekennzeichnet, daß** einem Teilnehmer ein Personal Computer (54) beigeordnet ist, auf dessen Anzeigeeinrichtung zur Anzeige der verknüpften Daten zurückgegriffen wird.

9. Verfahren nach Anspruch 8 **dadurch gekennzeichnet, daß** beim Personal Computer (54) die Applikation Telefonbuchanzeige mit Besetztinformation voreingestellt ist.

## Claims

1. A method for displaying data of target subscribers (50, 51, 52) in a subscriber terminal equipment, **characterized by** the following steps:
The status information arising in a private branch exchange (1) concerning subscribers connected are transmitted, together with the telephone number or another subscriber identification, to subscribers who dispose of a particular display device (54) for such status information or to whom such a display device is assigned,
the transmitted status information is linked with subscriber-individual data of a database (13), an unambiguous index being used as the linking criterion,
the data linked with each other are selectively displayed in a common display field (14).

2. The method according to claim 1, **characterized in that** an electronic telephone directory is used as the basis for the database (13), a corresponding entry being made in the database upon arrival of a status information or a new status information via the telephone number.

3. The method according to any of claims 1 or 2, **characterized in that** the status information transmitted is forwarded both to a local busy indication (8) and to a device (54) for storing and updating the database (13).

4. The method according to claim 3, **characterized in that** the database (13) is either adapted to a terminal-specific application or provided as an external database.

5. The method according to any of claims 2 to 4, **characterized in that**, upon initialization of a switching process via the electronic telephone directory, the status information of the subscriber to be called is displayed, together with the data stored on this subscriber in the database (13), in the common display field (14).

6. The method according to any of claims 1 to 5, **characterized in that**, as a function of the status information transmitted, it is prevented that a call is forwarded to a busy subscriber.

7. The method according to any of claims 1 to 6, **characterized in that** the common display field (14) comprises at least the data fields of telephone number, name and status information.

8. The method according to any of claims 1 to 7, **characterized in that** a subscriber is assigned a personal computer (54) whose display device is used for displaying the linked data.

9. The method according to claim 8, **characterized in that** the application of display of telephone directory with busy information is set as the default option on the personal computer (54).

## Revendications

1. Procédé pour afficher des données d'abonnés de destination (50, 51, 52) dans un ensemble terminal d'abonné, **caractérisé par** les pas suivants:
Les informations d'état se présentant dans une installation téléphonique automatique (1) sur des abonnés connectés sont transmises, avec le numéro de téléphone ou une autre identification d'abonné, à des abonnés qui disposent d'un dispositif d'affichage (54) particulier pour de telles informations d'état ou à qui un tel dispositif d'affichage est attribué,
les informations d'état transmises sont liées avec des données individuelles d'un abonné, d'une base de données (13), un indice univoque étant utilisé comme critère de liaison,
les données liées les unes avec les autres sont affichées de manière sélective dans un champ d'affichage (14) commun.

2. Procédé selon la revendication 1, **caractérisé en ce qu'**un annuaire téléphonique électronique est utilisé comme base pour la base de données (13), une entrée correspondante étant faite dans la base de données lors de l'arrivée d'une information d'état ou d'une nouvelle information d'état à travers le numéro de téléphone.

3. Procédé selon l'une quelconque des revendications 1 ou 2, **caractérisé en ce que** l'information d'état transmise est acheminée et à un indicateur local d'occupation (8) et à un dispositif (54) pour la mémorisation et la mise à jour de la base de données (13).

4. Procédé selon la revendication 3, **caractérisé en ce que** la base de données (13) est ou adaptée à une application spécifique au terminal ou mise à la disposition comme base de données externe.

5. Procédé selon l'une quelconque des revendications 2 à 4, **caractérisé en ce que**, lors de initialisation d'un processus de commutation à travers l'annuaire téléphonique électronique, l'information d'état de l'abonné à appeler est affichée, avec les données mémorisées de cet abonné dans la base de données (13), dans le champ d'affichage (14) commun.

6. Procédé selon l'une quelconque des revendications 1 à 5, **caractérisé en ce que**, en fonction de l'information d'état transmise, il est empêché qu'un appel soit acheminé vers un abonné occupé.

7. Procédé selon l'une quelconque des revendications 1 à 6, **caractérisé en ce que** le champ d'affichage (14) commun comprend au moins les champs de données du numéro de téléphone, du nom et de l'information d'état.

8. Procédé selon l'une quelconque des revendications 1 à 7, **caractérisé en ce qu'**un abonné est attribué à un ordinateur personnel (54) dont le dispositif d'affichage est utilisé pour afficher les données liées.

9. Procédé selon la revendication 8, **caractérisé en ce que** l'application de l'affichage de l'annuaire téléphonique avec information d'occupation est réglé comme option de défaut sur l'ordinateur personnel (54).
